## Europäisches Patentamt
## European Patent Office
## Office européen des brevets

(19)

(11) Numéro de publication: **0 201 404 B1**

(12) # FASCICULE DE BREVET EUROPÉEN

(45) Date de publication du fascicule du brevet:
**02.11.88**

(51) Int. Cl.⁴: **F 02 B 29/08,** F 01 L 1/08,
**F 02 B 37/02**

(21) Numéro de dépôt: **86400896.6**

(22) Date de dépôt: **24.04.86**

(54) **Procédé de commande de distribution pour moteur suralimenté par turbocompresseur.**

(30) Priorité: **02.05.85 FR 8506674**

(43) Date de publication de la demande:
**17.12.86 Bulletin 86/46**

(45) Mention de la délivrance du brevet:
**02.11.88 Bulletin 88/44**

(84) Etats contractants désignés:
**DE GB IT**

(56) Documents cité:
**DE-A-2 021 600**
**DE-C-976 926**
**FR-A-765 708**
**GB-A-338 872**
**US-A-2 858 666**

**PATENTS ABSTRACTS OF JAPAN, vol. 7, no. 85 (M-206) 1230 , 9 avril 1983; & JP - A - 58 10 112 (TOYOTA JIDOSHA KOGYO K.K.) 20-01-1983**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor- Hugo, F-92200 Neuilly- sur- Seine (FR)**

(72) Inventeur: **Sedille, Marcel, 13 Rue de Siam, F-75116 Paris (FR)**
Inventeur: **Le Creurer, Maurice, 77 Rue Maréchal Foch, F-95150 Taverny (FR)**

(74) Mandataire: **Moncheny, Michel, c/o Cabinet Lavoix 2 Place d'Estienne d'Orves, F-75441 Paris Cedex 09 (FR)**

LIBER, STOCKHOLM 1988

EP 0 201 404 B1

## Description

La presente invention concerne les moteurs à combustion interne suralimentés au moyen de turbo-compresseurs dont la turbine est entraînée en rotation par les gaz d'échappement du moteur.

On sait que les conditions d'encombrement des moteurs de vehicules automobiles, suralimentés par des turbo-compresseurs, sont telles que les conduits d'échappement entre le moteur et la turbine sont en général courts et que leur trace est parfois difficile. Ces conduits sont de volume relativement faible et la pression y est de ce fait très fluctuante.

En particulier, dans le cas des moteurs à quatre cylindres suralimentés par un seul turbo-compresseur, les bouffées d'échappement engéndrées dans les collecteurs, produisent des perturbations qui nuisent à une alimentation correcte des cylindres. Ce processus sera explicité plus en détail dans le corps de la description qui va suivre.

Il est également connu que pour tenter d'atténuer ces effets négatifs on peut prévoir pour un moteur à quatre cylindres deux collecteurs d'échappement dans chacun desquels débouchent deux cylindres. L'ordre d'allumage étant l'ordre classique 1, 3, 4, 2, les cylindres 1 et 4 d'une part et 2 et 3 d'autre part sont alors regroupés deux par deux. Les collecteurs correspondants se rejoignent bien entendu à l'entrée de la turbine du turbo-compresseur.

Cependant, même dans un tel agencement, les bouffées d'échappement qui se propagent dans les collecteurs ont également une incidence néfaste sur le remplissage des divers cylindres et d'une façon plus générale sur les conditions d'admission du melange dans les cylindres, de sorte que le problème subsiste.

Il est de plus indiqué, dans un brevet FR-A-765 708, que la commande des organes d'admission et/ou des organes d'échappement des cylindres peut être réglée de façon différente, cette mesure étant conjuguée au fait que les conduits d'échappement de certains cylindres sont séparés des autres jusqu'au voisinage de la turbine de l'ensemble turbo-compresseur. Cependant, une indication aussi imprécise quant à la façon dont les organes d'échappement peuvent être réglés ne permet pas de résoudre de façon efficace le problème énoncé ci-dessus. Un résultat inverse à celui recherché peut même être obtenu.

L'invention à donc pour objectif de résoudre les problèmes analysés ci-dessus et d'atténuer, sinon de faire disparaltre, l'incidence néfaste des bouffées d'échappement sur le fonctionnement du moteur.

A cet effet, l'invention à notamment pour objet un procédé de commande de la distribution d'un moteur à combustion interne à plusieurs cylindres, suralimenté par au moins un turbo-compresseur dont la turbine est entraînée par les gaz d'échappement du moteur, le moteur ayant des soupapes d'échappement dont les avances à l'ouverture respectives peuvent être différentes d'un cylindre à l'autre, caractérisé en ce que l'avance à l'ouverture de la soupape d'échappement d'un cylindre donné est réglée en fonction de la longueur de la portion de conduit d'échappement comprise entre ce cylindre donné et le cylindre précédent, dans l'ordre d'allumage, cette longueur étant définie par le trajet par lequel ce cylindre donné peut être relié au cylindre qui le précède dans l'ordre d'allumage, en passant par l'entrée du turbo-compresseur dans le cas où les cylindres sont reliés au turbo-compresseur par plus d'un collecteur d'échappement, ce réglage étant tel que les ondes des bouffées d'échappement de chaque cylindre parviennent au cylindre précédent, dans l'ordre d'allumage, avec un décalage dans le temps sensiblement constant par rapport au point mort haut dudit cylindre précédent, pour un régime déterminé du moteur, ledit décalage, représenté par une variation $\Delta\alpha$ de la position angulaire d'une came portée par un arbre à cames et commandant la soupape d'échappement d'un cylindre déterminé, étant est choisi de la façon suivante:

$$\Delta\alpha = \tfrac{L}{C} \times 6N$$

où:
- L est la longueur de la portion de conduit d'échappement comprise entre le cylindre déterminé et le cylindre précédent dans l'ordre d'allumage;
- C est la célérité du son; et,
- N la vitesse du moteur en tours/minute pour laquelle on désire un résultat optimal.

L'invention a également pour objet un moteur à combustion interne à plusieurs cylindres, spécialement adapté pour mettre en oeuvre le procédé défini ci-dessus.

Les autres caractéristiques du procédé, énoncées ci-dessus, s'appliquent bien entendu à un tel moteur.

L'invention va être décrite plus en détail ci-dessous en se référant au dessin annexé donné uniquement à titre d'exemple et sur lequel:

- la Fig. 1 est un schéma permettant d'expliquer les termes du problème à résoudre et la solution proposée;
- les Fig. 2 et 3 sont deux schémas montrant deux agencements, par ailleurs connus, des conduits d'échappement d'un moteur à combustion interne à turbo-compresseur.

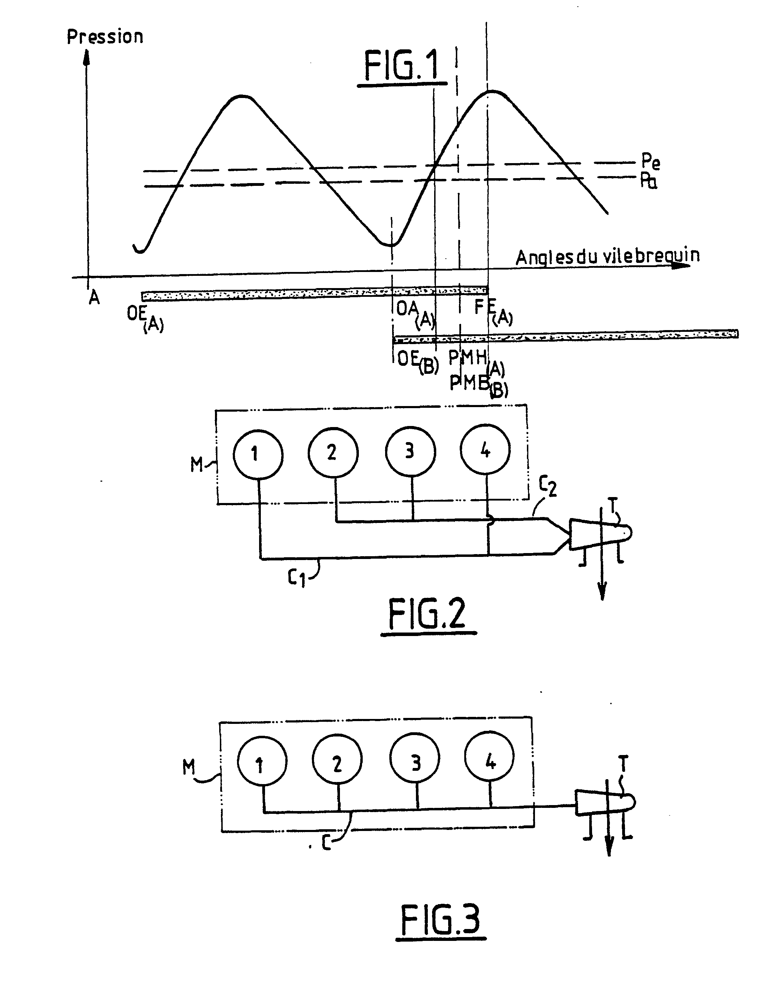

La Fig. 1 représente le diagramme des pressions en fonction de la position angulaire du vilebrequin, dans un collecteur d'échappement entre un moteur M et une turbine T de turbo-compresseur entraînée par les gaz d'échappement de ce moteur. Pour un cylindre A, la phase d'échappement s'étend de $OE_{(A)}$

(ouverture de la soupape d'échappement) jusqu'à $FE_{(A)}$ (fermeture de cette même soupape, qui se situe un peu au-delà du point mort haut $PMH_{(A)}$ de ce même cylindre. Au début de l'échappement, la pression croît rapidement, par suite de l'effet de bouffée bien connu. Elle passe par un maximum puis décroît jusqu'à l'ouverture $OE_{(B)}$ de la soupape d'échappement du cylindre suivant B, dans l'ordre de la distribution. La pression remonte ensuite comme précédemment.

Pour le cylindre A, l'ouverture de la soupape d'admission $OA_{(A)}$ commence un peu avant son point mort haut, de sorte que pendant un certain temps il existe un recouvrement des soupapes établissant une communication directe entre le collecteur d'admission et le collecteur d'échappement.

On sait par ailleurs que pour les moteurs rapides que sont les moteurs de véhicules automobiles, l'avance à l'ouverture des soupapes d'échappement est en général assez importante de sorte que le point $OE_{(B)}$ précède largement le point $PMH_{(A)}$.

Compte tenu des valeurs habituelles des avances à l'ouverture d'échappement, il en résulte qu'au moment du croisement des soupapes la pression à l'échappement $P_{(e)}$ est en général superieure à la pression d'alimentation en air $P_{(a)}$ fournie par le compresseur. Pendant cet intervalle de temps, il en résulte un débit des gaz qui s'écoulent de l'échappement vers l'admission à travers les deux soupapes et le fond du cylindre.

Au moment de la fermeture de la soupape d'échappement, le fond de cylindre contient alors des gaz brûlés à une pression et une température élevées, et une portion des gaz brûlés occupe un certain volume dans la chapelle d'admission. Quand l'admission se poursuit, les gaz brûlés contenus dans le fond du cylindre se détendent d'abord, puis le volume des gaz brûlés contenus dans la chapelle d'admission est aspiré avant que de l'air froid soit admis dans le cylindre. On constate alors une réduction du coefficient de remplissage et un accroissement de la température moyenne en fin d'admission qui est néfaste et qui dans les moteurs à essence en particulier, accroit les risques de detonation.

Si l'on considère l'agencement de la Fig. 2, qui représente schématiquement par ses quatre cylindres 1, 2, 3, 4 un moteur à combustion interne M suralimenté par un turbo-compresseur, on voit que le collecteur d'échappement est agencé de facon à regrouper les cylindres deux par deux, de manière que deux cylindres successifs dans l'ordre d'allumage échappent dans des conduits différents. L'ordre d'allumage étant supposé être 1, 3, 4, 2, les cylindres 1 et 4 d'une part et 2 et 3 d'autre part sont regroupés et debouchent dans les deux collecteurs $C_1$, $C_2$ qui se rejoignent à l'entrée de la turbine T du turbo-compresseur.

On voit sur le schéma de la Fig. 2 que la longueur $L_i$ de la portion de conduit d'échappement comprise entre un cylindre donné i et le cylindre précédent dans l'ordre d'allumage est différente pour chaque couple de cylindres: $L_4 < L_2 < L_3 < L_1$.

Il suffit pour matérialiser ou mesurer cette distance Li de suivre, sur le schéma représentant le moteur, le trajet par lequel un cylindre donné peut être relié au cylindre qui le précède, dans l'ordre d'allumage.

Dans l'exemple de la figure 2, ce trajet doit passer par le point de jonction entre les deux collecteurs C1 et C2, c'est-à-dire par l'entrée du turbo-compresseur.

Dans ce cas, la longueur Li est alors la somme de deux tronçons compris chacun dans l'un des conduits C1 et C2.

Suivant l'invention, on règle l'avance à l'ouverture d'échappement pour chacun des cylindres en fonction de la longueur que l'onde de bouffée doit parcourir à partir du cylindre considéré, pour atteindre le cylindre précédent, dans l'ordre d'allumage ce réglage s'effectue de façon connue en disposant convenablement les cames sur l'arbre à cames et/ou en choisissant en conséquence le profil de ces cames.

Ainsi, pour le cas de la Fig. 2, l'avance à l'ouverture d'échappement des quatre cylindres s'échelonne dans l'ordre suivant:

$$AOE_4 < AOE_2 < AOE_3 < AOE_1.$$

Les écarts correspondants sont de préférence du même ordre de grandeur que les quantités:

$$\Delta \alpha \, ij \sim \tfrac{L_i - L_j}{c} \times 6N$$

Dans ces formules M est la vitesse du moteur en tours/minute, pour laquelle on désire obtenir un résultat optimal, cette vitesse peut être choisie à volonté entre le ralenti et la vitesse maximale, suivant la destination du moteur.

Un tel décalage des avances à l'ouverture d'échappement aboutit à ce que les ondes des bouffées d'échappement des différents cylindres parviennent aux soupapes des cylindres qui les précédent dans l'ordre d'allumage, à peu près au même instant par rapport au point mort haut de ces derniers, pour la vitesse N du moteur.

Bien entendu, pour une valeur différente de N, cette propriété n'est plus rigoureusement exacte, mais au point mort haut, la pression qui règne dans le conduit d'échappement reste voisine du minimum et les inconvénients liés à une valeur élevée de celle-ci disparaissent quand même. Le choix de la vitesse N à prendre en compte dans la formule ci-dessus peut alors être effectué de manière à éviter ces inconvénients et en particulier les contre-balayages pour tous les cylindres, aux régimes les plus utiles et surtout au voisinage de la vitesse maximale.

A titre d'exemple:

Si l'on a     $L_4 = 0,30$ m,
                $L_2 = 0,36$ m,
                $L_1 = 0,54$ m,
                $L_3 = 0,48$ m,

en choisissant    N = 5000 t/m,
sachant que     C = 600 m/s,
on trouve     $\Delta\alpha_4$ = 15°,
          $\Delta\alpha_2$ = 18°,
          $\Delta\alpha_1$ = 27°,
          $\Delta\alpha_3$ = 24°.

On peut alors prendre, par exemple, les valeurs suivantes pour les avances à l'ouverture échappement:

$AOE_4$ = 23°,
$AOE_2$ = 26°,
$AOE_1$ = 35°,
$AOE_3$ = 32',

où des valeurs proches de celles-ci et, dans ces conditions, le minimum de la courbe qui donne la pression d'échappement à la sortie d'un cylindre se situera sensiblement à 8° avant le point mort haut de ce cylindre.

Bien entendu l'invention s'applique quelle que soit la disposition des conduits d'échappement du moteur et notamment a une disposition plus classique telle que représentée à la Fig. 3. Les décalages des ouvertures à l'échappement sont bien entendu adaptés en conséquence pour tenir compte des longueurs de conduits d'échappement entre les différents cylindres.

Dans toutes les configurations, la mise en oeuvre de l'invention permet d éliminer dans une très large mesure les inconvénients analysés précédemment et d'améliorer les conditions de remplissage des cylindres et donc le rendement du moteur.

**Revendications**

1. Procédé de commande de la distribution d'un moteur à combustion interne (M) à plusieurs cylindres suralimenté par au moins un turbo-compresseur dont la turbine (T) est entraînée par les gaz d'échappement du moteur, le moteur ayant des soupapes d'échappement dont les avances à l'ouverture respectives peuvent être différentes d'un cylindre à l'autre caractérisé en ce que l'avance à l'ouverture de la soupape d'échappement d'un cylindre donné est réglée en fonction de la longueur de la portion de conduit d'échappement comprise entre ce cylindre donné et le cylindre précédent, dans l'ordre d'allumage, cette longueur étant définie par le trajet par lequel ce cylindre donné peut être relié au cylindre qui le précède dans l'ordre d'allumage, en passant par l'entrée du turbo-compresseur dans le cas où les cylindres sont reliés au turbo-compresseur par plus d'un collecteur d'échappement, ce réglage étant tel que les ondes des bouffées d'échappement de chaque cylindre parviennent au cylindre précédent, dans l'ordre d'allumage, avec un décalage dans le temps sensiblement constant par rapport au point mort haut dudit cylindre précédent, pour un régime déterminé du moteur, ledit décalage, représenté par une variation $\Delta\alpha$ de la position angulaire d'une came portée par un arbre à cames et commandant la soupape d'échappement d'un cylindre déterminé, étant choisi de la façon suivante:

$$\Delta\alpha = \tfrac{L}{C} \times 6N$$

où:
- L est la longueur de la portion de conduit d'échappement comprise entre le cylindre déterminé et le cylindre précédent dans l'ordre d'allumage;
- C est la célérité du son; et,
- N la vitesse du moteur en tours/minute pour laquelle on désire un résultat optimal.

2. Moteur à combustion interne à plusieurs cylindres, adapté pour mettre en oeuvre le procédé selon la revendication 1, suralimenté par au moins un turbo-compresseur dont la turbine (T) est entraînée par les gaz d'échappement du moteur (M), et muni d'un dispositif de distribution déterminant, notamment, l'instant d'ouverture des soupapes d'échappement des divers cylindres, caractérisé en ce que le dispositif de distribution est agencé de telle façon que l'avance à l'ouverture des soupapes d'échappement des différents cylindres (1, 2, 3, 4) soit réglée en fonction de la longueur de la portion de conduit d'échappement comprise entre chaque cylindre et le cylindre précédent dans l'ordre d'allumage, ce réglage étant tel que les ondes des bouffées d'échappement de chaque cylindre parviennent au cylindre précèdent, dans l'ordre d'allumage, avec un décalage dans le temps à peu près constant par rapport au point mort haut dudit cylindre précèdent, pour un régime déterminé du moteur, ledit décalage, représenté par une variation $\Delta\alpha$ de la position angulaire d'une came portée par un arbre à cames et commandant la soupape d'échappement d'un cylindre déterminé, étant choisi de la façon suivante:

$$\Delta\alpha = \tfrac{L}{C} \times 6N$$

où
- L est la longueur de la portion de conduit d'échappement comprise entre le cylindre déterminé et le cylindre précèdent dans l'ordre d'allumage;
- C est la célérité du son; et,
- M la vitesse du moteur en tours/minute pour laquelle on désire un résultat optimal.

**Patentansprüche**

1. Verfahren zur Ventilsteuerung bei einem Mehrzylinder-Verbrennungsmotor (M), der mittels wenigstens eines Turboladers aufgeladen wird, dessen Turbine (T) durch das Abgas des Motors angetrieben wird, wobei der Motor Auslaßventile hat, deren jeweilige Öffnungsvorverstellungen von Zylinder zu Zylinder verschieden sein können, dadurch gekennzeichnet, daß die Öffnungsvorverstellung des Auslaßventils eines bestimmten Zylinders in Abhängigkeit von der Länge des Abgasleitungsabschnitts zwischen diesem bestimmten Zylinder und dem, in der Zündreihenfolge, vorangehenden Zylinder eingestellt wird, wobei diese Länge durch die Wegstrecke definiert ist, durch die dieser bestimmte Zylinder mit dem ihm in der Zündreihenfolge vorangehenden Zylinder, unter Durchgang durch den Eingang des Turboladers in einem Fall, wo die Zylinder mit dem Turbolader über mehr als einen Auspuffsammler verbunden sind, verbunden werden kann, wobei diese Einstellung derart ist, daß die Abgasstoßwellen eines jeden Zylinders an dem in der Zündreihenfolge vorangehenden Zylinder mit einer Zeitverschiebung ankommen, die in Bezug auf den oberen Totpunkt dieses vorangehenden Zylinders für einen bestimmten Drehzahlbereich des Motors im wesentlichen konstant ist, wobei diese Verschiebung, dargestellt durch eine Variation $\Delta\alpha$ der Winkellage eines auf einer Nockenwelle sitzenden und das Auslaßventil eines bestimmten Zylinders steuernden Nockens, in folgender Weise gewählt ist:

$$\Delta\alpha = \tfrac{L}{C} \times 6N$$

wobei:
- L die Länge des Abgasleitungsabschnitts zwischen dem bestimmten Zylinder und dem in der Zündreihenfolge vorangehenden Zylinder,
- C die Schallgeschwindigkeit, und
- N die Drehzahl des Motors in Umdrehungen/Minute, für welche man ein optimales Ergebnis wünscht, ist.

2. Mehrzylinder-Verbrennungsmotor zur Durchführung des Verfahrens nach Anspruch 1, welcher durch wenigstens einen Turbolader aufgeladen wird, dessen Turbine (T) durch das Abgas des Motors (M) angetrieben wird, und welcher mit einer Ventilsteuervorrichtung versehen ist, die, insbesondere, den Öffnungszeitpunkt der Auslaßventile der verschiedenen Zylinder bestimmt, dadurch gekennzeichnet, daß die Ventilsteuervorrichtung so eingerichtet ist, daß die Öffnungsvorverstellung der Auslaßventile der verschiedenen Zylinder (1, 2, 3, 4) in Abhängigkeit von der Länge des Abgasleitungsabschnitts zwischen jedem Zylinder und dem in der Zündreihenfolge vorangehenden Zylinder eingestellt wird, wobei diese Einstellung derart ist, daß die Abgasstoßwellen eines jeden Zylinders für einen bestimmten Drehzahlbereich des Motors an dem in der Zündreihenfolge vorangehenden Zylinder mit einer ungefähr konstanten Zeitverschiebung in Bezug auf den oberen Totpunkt dieses vorangehenden Zylinders ankommen, wobei diese Zeitverschiebung, dargestellt durch eine Variation $\Delta\alpha$ der Winkellage eines auf einer Nockenwelle sitzenden und das Auslaßventil eines bestimmten Zylinders steuernden Nockens, in folgender Weise gewählt wird,

$$\Delta\alpha = \tfrac{L}{C} \times 6N$$

wobei:
- L die Länge des Abgasleitungsabschnitts zwischen dem bestimmten Zylinder und dem in der Zündreihenfolge vorangehenden Zylinder,
- C die Schallgeschwindigkeit, und
- N die Drehzahl des Motors in Umdrehungen/Minute, für welche man ein optimales Ergebnis wünscht, ist.

## Claims

1. A process for controlling the timing of an internal combustion engine (M) having a plurality of cylinders supercharged by at least one turbo-compressor whose turbine (D) is driven by the exhaust gases of the engine, the engine having exhaust valves, wherein the advance of the opening of the respective valves can vary from one cylinder to another, characterised in that the advance of the opening of the exhaust valve of a given cylinder is regulated as a function of the length of the exhaust pipe portion between this given cylinder and the preceding cylinder in the ignition order, this length being defined by the distance by which this given cylinder can be connected to the preceding cylinder in the ignition order by passing through the inlet of the turbo-compressor when these cylinders are connected to the turbo-compressor by more than one exhaust manifold, this regulation being such that the waves of the exhaust blasts of each cylinder reach the preceding cylinder, in the ignition order, with a stagger in time which is substantially constant with respect to the top dead centre of said preceding cylinder for a given engine operating speed, said stagger, which is represented by a variation $\Delta\alpha$ of the angular position of a cam carried by a camshaft and controlling the exhaust valve of a given cylinder, being selected in the following manner:

$$\Delta\alpha = \tfrac{L}{C} \times 6N$$

in which
L is the length of the exhaust pipe portion between the given cylinder and the preceding cylinder in the ignition order;
C is the velocity of sound; and
N is the speed of the engine in rpm in respect of which an optimum result is desired.

2. An internal combustion engine having a plurality of cylinders adapted for carrying out the process according to claim 1, which is supercharged by at least one turbo-compressor whose turbine (T) is driven by the exhaust gases of the engine (M) and is provided with a timing device which determines, in particular, the instant of opening of the exhaust valves of the various cylinders, characterised in that the timing device is so arranged that the advance of the opening of the exhaust valves of the various cylinders (1, 2, 3, 4) is regulated as a function of the length of the exhaust pipe portion between each cylinder and the preceding cylinder in the ignition order, this regulation being such that the waves of the exhaust blasts of each cylinder reach the preceding cylinder, in the ignition order, with a stagger in time which is roughly constant relative to the upper dead centre of said preceding cylinder for a given operating speed of the engine, said stagger, which is represented by a variation $\Delta\alpha$ of the angular position of a cam carried by a camshaft and controlling the exhaust valve of a given cylinder, being selected in the following manner:

$$\Delta\alpha = \frac{L}{C} \times 6N$$

in which

L is the length of the exhaust pipe portion between the given cylinder and the preceding cylinder in the ignition order;

C is the velocity of sound; and N is the speed of the engine in rpm, in respect of which an optimum result is desired.

Pression

## FIG.1

Pe
Pd

Angles du vilebrequin

A

OE$_{(A)}$  OA$_{(A)}$  FE$_{(A)}$

OE$_{(B)}$  PMH$_{(A)}$
PMB$_{(B)}$

## FIG.2

M  1  2  3  4  C$_2$

C$_1$  T

## FIG.3

M  1  2  3  4

C  T

1